# EUROPEAN PATENT APPLICATION

(11) **EP 2 549 244 A1**
(43) Date of publication of application: **23.01.2013**
(21) Application number: 12176245.4
(22) Date of filing: 13.07.2012
(51) Int. Cl.: G01G 19/44

(54) **Floor covering element with pressure sensor**

(30) Priority: 20.07.2011 IT MI20110251 U
(71) Applicant: Cantaluppi, Elena, 22100 Como (IT)
(72) Inventor: Cantaluppi, Elena, 22100 Como (IT)
(74) Representative: Zanellato, Gianluca

(57) **Abstract**

A floor covering element comprising a tile (2) presenting a treadable surface (2a), and at least one pressure sensor (6) connected to a surface (2b) of the tile (2) opposite the treadable surface (2a).

## Description

The present invention relates to a floor covering element. In particular, the present invention finds advantageous application with reference to internal room floors.

For floor covering, ceramic, marble, wood or other tiles are used, adhesive-bonded to the floor surface and, in particular, to a foundation formed for example of concrete.

All covering elements of known type are generally proposed for the sole purpose of providing a comfortable support surface of pleasant appearance in internal rooms.

In particular, if the room in question is to be provided with a body weighing scale, this has to be rested on the covered floor, possibly in a zone in which personal transit is limited (in order not to cause hindrance) and, in any event, has always to be shifted when cleaning the room in question. The ability to verify one's body weight is becoming an increasingly felt requirement because of growing problems relating to overweight and obesity. Hence in specific environments such as, for example, hotel bathrooms or gymnasium dressing rooms, the presence of a weighing scale is particularly appreciated.

In this context, the technical aim of the present invention is to propose a floor covering element which overcomes the drawbacks of the aforestated known art.

A particular object of the present invention is to provide a covering element which enables the weight of a user to be measured without presenting any bulk and without appearing as a structure extraneous to the floor.

The stated technical aim and the specified objects are substantially attained by a covering element, comprising the technical characteristics stated in one or more of the accompanying claims.

Further characteristics and advantages of the present invention will be more apparent from the description provided by non-limiting example of a preferred but non-exclusive embodiment of a floor covering element, as illustrated in the accompanying drawings, in which:
Figure 1 is a schematic lateral view of a floor covering element in accordance with a preferred embodiment of the present invention;
Figures 2, 3 and 4 are schematic lateral views of alternative embodiments of the floor covering element of Figure 1.

With reference to the accompanying figures, the reference numeral 1 indicates overall a floor covering element in accordance with the present invention.

The covering element 1 comprises a tile 2 presenting a treadable surface 2a and an opposite surface 2b.

The tile 2 can present any shape, It can for example be square, rectangular, polygonal, round or another shape.

The tile 2 can be formed of ceramic, such as porcelain stoneware, glass, wood or other material. More generally, the tile 2 can be formed of completely opaque, partially translucent or transparent material.

It should be noted that neither the shape nor the material of the tile 2 is influential for the purposes of the present invention.

Preferably, the covering element 1 comprises a support body 3 associated with the tile 2 to support it and enable the covering element 1 to be laid.

As shown, the support body 3 comprises a plate 4 disposed parallel to the tile 2. Preferably, the plate 4 is flat and faces the surface 2b opposite the treadable surface 2a of the tile 2. By way of example, the plate 4 is formed of plastic material. However the plate 4 can be formed of other materials such as metal, wood or others.

The plate 4 presents, opposite the tile 2, a laying surface 4a shaped and/or corrugated and/or knurled such as to adhere to the floor in order to improve floor adherence of the covering element 1.

Alternatively, the plate 4 can comprise reversible fixing means (not shown) at the laying surface 4a to enable stable laying together with quick removal of the covering element 1 from the floor. These fixing means are preferably of forced insertion type.

The plate 4 is of the same shape and size as the tile 2.

Advantageously the support body 3 can also comprise a lateral wall 5 extending from and away from the plate 4 and approaching the tile 2. In this manner the lateral wall covers the edges 2c of the tile 2.

If the tile 2 is square, the plate 4 is also square and the lateral wall 5 presents four equal portions which extend from each side of the plate 5. The covering element 1 also comprises at least one pressure sensor 6 (or force sensor) disposed on the surface 2b opposite the treadable surface 2a of the tile 2.

If the support body 3 is absent, when the tile 2 rests directly on the floor to be covered, the pressure sensor 6 lies interposed between the tile 2 and the floor to be covered. In this manner, when a person rests on the treadable surface 2a, the covering element is able to measure the person's weight.

In the illustrated embodiments, the pressure sensor 6 lies interposed between the tile 2 and the support body 3. In detail, the pressure sensor 6 is contactingly disposed between that surface 2b opposite the treadable surface 2a of the tile 2 and a surface 4b opposite the laying surface 4a of the plate 4.

In the preferred embodiment, the pressure sensor 6 is a load cell. Alternatively, the pressure sensor 6 is an extensometer. In general, the pressure sensor 6 can be any transducer arranged to convert the force (or pressure, understood as the force in relation to the surface of application of this force) exerted thereon into an electric signal representative of the measurement of this force.

According to that illustrated, the covering element 1 according to the present invention comprises a plurality of pressure sensors 6 disposed between the tile 2 and the support body 3 such that the tile 2 lies resting on the pressure sensors 6.

Preferably, the pressure sensors 6 are equidistant from each other, such as to measure the user's weight uniformly.

The tile 2 can be coupled to the support body 3 by simply resting thereon. In other words, the tile 2 rests directly on the pressure sensors 6. In that case, no further connection between the tile 2 and the support body 3 is provided.

In other embodiments, connection means (not shown), preferably reversible, are operatively disposed between the tile 2 and the support body 3. By way of example, these connection means can comprise guides or hooks which enable stable coupling between the tile 2 and the support body 3, but which also enable the tile 2 to be separated from the support body 3, for example to clean or repair the pressure sensors 6.

A gasket (not shown), or any other means for isolating the interspace between the tile 2 and the support body 3, can be disposed between the tile 2 and the support body 3 to prevent water or any other liquid from infiltrating to reach and possibly damage the pressure sensors 6. In detail, the gasket can be disposed between the tile 2 and the plate 4 and/or between the tile 2 and the lateral wall 5.

Advantageously, the covering element 1 comprises a display device 7 operationally associated with the pressure sensor 6 (or with the pressure sensors 6) to display the measured weight to the user.

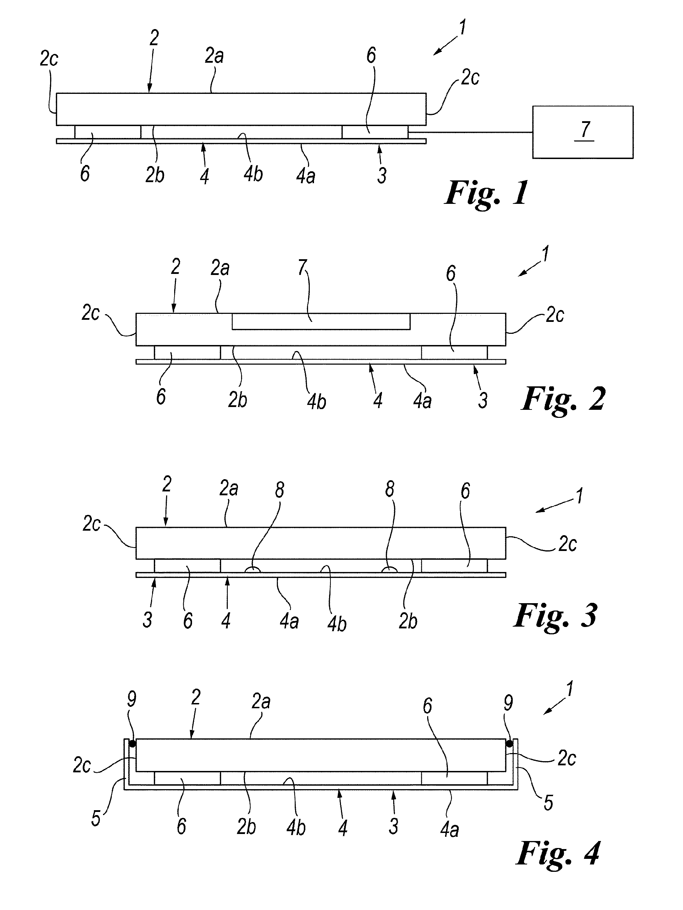

The display device 7 can be separate from the tile 2 and/or from the support body 3 (Figure 1). In that case, the display device 7 can be suspended on or integrated into a wall of the room in which the covering element 1 is laid. Alternatively, the display device 7 can be rested on a horizontal surface.

Again alternatively, the display device 7 can be integrated with the tile 2 (Figure 2). **I**n that case, the tile 2 presents a recess or a compartment (passing totally or partially through the tile 2) in which the display device 7 is housed. Preferably, an exposed surface of this display device 7 is aligned with the treadable surface 2a of the tile 2.

Advantageously, the covering element 1 comprises a processor unit (not shown) operationally associated with the pressure sensor 6 and with the display device 7 to receive a signal representative of the weight measured by the pressure sensors 6 and to generate a signal representative of the weight display and to activate and deactivate the pressure sensors 6.

In the example of Figure 3, the tile 2 of the covering element 1 is formed of transparent or translucent material. In this case, the covering element 1 comprises a lighting device 8 comprising one or more LEDs for rearlighting the tile 2. As illustrated, the LEDs are disposed on that surface 4b opposite the laying surface 4a of the plate 4.

The invention described in this manner attains the proposed object.

In this respect, the described covering element can be easily laid, to integrate with the remaining part of the flooring. In this manner, a room (which can for example be a hotel bathroom) can be provided with a body weighing device without representing any bulk.

Moreover, as this covering element is embedded in the room flooring, it enables the body weight scale to be hidden, hence also maintaining it aesthetically "discreet".

## Claims

1. A floor covering element comprising a tile (2) presenting a treadable surface (2a), **characterised by** comprising at least one pressure sensor (6) connected to a surface (2b) of the tile (2) opposite the treadable surface (2a).

2. A covering element as claimed in claim 1, **characterised by** also comprising a support body (3) which is associated with the tile (2) to support the tile (2) and is positionable on a floor to be covered, said sensor being positioned between said tile (2) and said support body (3).

3. A covering element as claimed in claim 1 or 2, **characterised in that** said pressure sensor (6) comprises at least one load cell.

4. A covering element as claimed in any one of the preceding claims, **characterised by** comprising a plurality of said pressure sensors (6); said tile (2) resting on said pressure sensors (6).

5. A covering element as claimed in any one of the preceding claims, **characterised by** also comprising a display device (7) connected to at least said pressure sensor (6) to display the measured weight.

6. A covering element as claimed in claim 5, **characterised in that** said display device (7) is separate from said tile (2) and/or said support body (3).

7. A covering element as claimed in claim 5, **characterised in that** said display device (7) is integrated into said tile (2).

8. A covering element as claimed in any one of the preceding claims, **characterised in that** said support body (3) comprises a plate (4) disposed parallel to said tile (2) and comprising, opposite the tile (2), a laying surface (4a) shaped and/or corrugated and or knurled to adhere to said floor.

9. A covering element as claimed in claim 8, **characterised in that** said support body (3) also comprises a lateral wall (5) extending from said plate (4) to at least partially cover the edges (2c) of said tile (2).

10. A covering element as claimed in any one of the preceding claims, **characterised by** comprising a processor unit operationally associated with said pressure sensor (6) and said display device (7) to activate and deactivate said pressure sensor (6) and to measure said weight.
